# EUROPEAN PATENT SPECIFICATION

(11) **EP 4 266 572 B1**
(45) Date of publication and mention of the grant of the patent: **04.02.2026**
(21) Application number: 21922538.0
(22) Date of filing: 07.12.2021
(51) Int. Cl.: H02P 25/22, H02P 27/06, H02K 5/22, H05K 7/14, H02K 11/33

(54) **ELECTRIC DRIVE SYSTEM AND VEHICLE**
ELEKTRISCHES ANTRIEBSSYSTEM UND FAHRZEUG
SYSTÈME DE PROPULSION ÉLECTRIQUE ET VÉHICULE

(30) Priority: 29.01.2021 CN 202110126673
(43) Date of publication of application: 25.10.2023
(73) Proprietor: China Faw Co., Ltd., Changchun, Jilin 130011 (CN)
(72) Inventor: WANG, Sibo, Changchun, Jilin 130011 (CN); LIU, Jinfeng, Changchun, Jilin 130011 (CN); ZHAO, Huichao, Changchun, Jilin 130011 (CN); WANG, Guoqiang, Changchun, Jilin 130011 (CN); WANG, Lijun, Changchun, Jilin 130011 (CN); CANG, Yan, Changchun, Jilin 130011 (CN); XU, Decai, Changchun, Jilin 130011 (CN); HUANG, Zhihao, Changchun, Jilin 130011 (CN); GAO, Yi, Changchun, Jilin 130011 (CN)
(74) Representative: Penza, Giancarlo
(86) International application number: PCT/CN2021/136057
(87) International publication number: WO 2022/160948

(56) References cited:
- CN-A- 102 092 272
- CN-A- 108 407 587
- CN-A- 112 968 653
- CN-U- 207 368 890
- CN-U- 210 517 972
- CN-U- 211 744 370
- CN-U- 211 791 314
- CN-U- 211 791 314
- FR-A1- 3 081 391
- US-B2- 10 715 003

## Description

### Cross-Reference to Related Application

The present invention claims the priority to Chinese Patent Application No. 202110126673.1, filed with the Chinese Patent Office on January 29, 2021.

### Technical Field

The present invention relates to the technical field of high-power electric drive system arrangement, in particular to an electric drive system and a vehicle.

### Background

With growing demands for high-power inverters and growing requirements for an electric drive system, which cannot be satisfied by output parameters of a single power module, numerous power modules are generally combined into a power module with the higher current density for improving a power level of an electric drive assembly. Two prevailing solutions are available to combine the power modules. In the first solution, that is, a single three-phase solution, numerous power modules are connected in parallel to output a three-phase (U, V and W) alternating-current after currents are converged through a conductive bar, and transmit the currents to a conventional three-phase motor. In the other solution, that is, a dual three-phase solution, the power modules output respective three-phase (U1, V1, W1 and U2, V2, W2) alternating currents, and transmit the currents to a six-phase motor, through the combined action of which the effect of high power is achieved.

Both solutions have inherent defects and development failure risk in the case of lack of mature development experience despite that they can provide output parameters as required, flexible layout, high cost performance, etc. For example, in the single three-phase solution, uneven current distribution may occur to the multiple power modules connected in parallel, and will vary their loads. As a result, some power modules are under loaded and some others are overloaded, which reduces the reliability of the power modules and the stability of the system, greatly shortens the life of the power modules, and even damages the power modules and devices in serious cases. The dual three-phase solution requires a brand-new control system, as well as complicated control algorithms.

As disclosed in Patent Application No. CN1031153A and entitled "Novel Dual-Motor Controller for Electric Vehicle", a novel dual-motor controller for an electric vehicle includes a first main control panel and a second main control panel arranged on an upper layer and a lower layer of a box respectively. The first main control panel includes: a first motor control chip, a first motor drive module, a first direct-current support capacitor, a first direct-current copper busbar and a first alternating-current copper busbar. The second main control panel is symmetrically arranged at the lower layer of the box, and a cooling water channel is arranged between the first main control panel and the second main control panel. A rear end of a drive circuit of a first drive board is further connected to a second power inverter, and a rear end of a drive circuit of a second drive board is further connected to a first power inverter. The dual-motor controller for an electric vehicle based on the present invention adopts an integrated mechanism, which greatly reduces the size of a dual-motor control circuit and saves vast space. The dual-motor controller for an electric vehicle has a compact structure, a low manufacturing cost and a low failure rate, and can guarantee minimum operation of dual motors when a battery pack or controller on one side fails.

However, in a dual-inverter integrated structure based on the present invention above-mentioned, two nonparallel motors are driven, and cannot output high power and high currents.

Therefore, it is urgent to develop an electric drive system and a vehicle to solve the technical problems above mentioned.

In the electric drive system of patent US 10 715 003 B2 a speed reducer is placed between a circuit board and a motor unit, and the circuit output is connected to the motor input terminals electrically by two AC busbar groups (suitable for supplying a six-phase motor) that penetrate through a bottom wall with through-holes arranged in the reducer. Document CN 207 368 890 U discloses a power electronic unit provided with two inverter power modules arranged in a box structure, and each power module is arranged with three power output ends. The inverter assembly comprises two AC transit output buses, each comprising three second AC busbars and three second output terminals configured to supply a six-phase motor. Document CN 211 791 314 U discloses a partition plate with an electromagnetic shielding material arranged to divide the case assembly into two mounting cavities, and a water cooling assembly arranged between two power modules. All three documents provide related technical solutions; however, the above mentioned problem still remains unsolved.

### Summary

The present invention provides an electric drive system and a vehicle. Two types of inverter assemblies have basically the same structure despite a difference lying in an alternating-current busbar assembly and an internal connection circuit, modular design of the inverter assembly is implemented, the inverter assemblies corresponding to two types of motors can be synchronously developed, and a research and development cost can be reduced. Parallel dual-power modules can provide high drive power and high currents for an ordinary three-phase motor. Combined action of the dual-power modules and a six-phase motor can achieve an effect of high power.

In a first aspect, an electric drive system according to claim 1 is provided.

In a second aspect, a vehicle according to claim 9 is provided. The vehicle includes the electric drive system above-mentioned.

### Brief Description of the Drawings

Fig. 1 is a schematic structural diagram of an electric drive system according to an embodiment of the present invention;
Fig. 2 is a schematic structural diagram of a reducer assembly according to an embodiment of the present invention;
Fig. 3 is a schematic structural diagram of an adapter seat according to an embodiment of the present invention;
Fig. 4 is a circuit diagram of a single three-phase solution according to the an embodiment of present invention;
Fig. 5 is a schematic structural diagram of an inverter assembly of a single three-phase solution according to an embodiment of the present invention;
Fig. 6 is a schematic structural diagram of a motor assembly of a single three-phase solution according to an embodiment of the present invention;
Fig. 7 is an exploded view of an inverter assembly of a single three-phase solution according to an embodiment of the present invention;
Fig. 8 is a schematic structural diagram of a main case according to the an embodiment of present invention;
Fig. 9 is a schematic partial structural diagram of an inverter assembly of a single three-phase solution according to an embodiment of the present invention;
Fig. 10 is a schematic structural diagram of a first alternating-current busbar assembly according to an embodiment of the present invention;
Fig. 11 is a circuit diagram of a dual three-phase solution according to an embodiment of the present invention;
Fig. 12 is a schematic structural diagram of an inverter assembly of a dual three-phase solution according to an embodiment of the present invention;
Fig. 13 is a schematic structural diagram of a motor assembly of a dual three-phase solution according to an embodiment of the present invention;
Fig. 14 is a schematic partial structural diagram of an inverter assembly of a dual three-phase solution according to an embodiment of the present invention; and
Fig. 15 is a schematic structural diagram of two second alternating-current busbar assemblies according to the present invention.

In the figures:
100. Inverter assembly;
11. Main case; 111. Cooling water inlet; 112. Cooling water outlet; 113. High-voltage direct-current connector mounting port; 114. Low-voltage connector mounting port; 115. Ventilator mounting port; 116. Grounding point; 12. Partition plate; 13. Upper cap; 14. Lower cap; 141. Mounting post;
2. High-voltage direct-current connector; 3. Direct-current busbar assembly; 4. Direct-current bus capacitor; 5. Power module;
6. First alternating-current busbar assembly; 61. First alternating-current busbar; 62. First output terminal;
71. Water inlet channel; 72. Water outlet channel; 731. First cooling water port; 732. Second cooling water port;
80. Control panel; 83. Current sensor; 84. Shield plate; 841. Shield portion; 842. Connection portion; 85. Drive board;
9. Second alternating-current busbar assembly; 92. Second output terminal;
200. Reducer assembly; 201. Conducting bar via hole; 202. Connection window;
220. Adapter seat; 221. Input interface U1; 222. Input interface U2; 223, Input interface V1;
224. Input interface V2; 225. Input interface W1; 226. Input interface W2;
300. Motor assembly; 310. First alternating-current terminal; 320. Second alternating-current terminal.

### Detailed Description

Technical solutions of examples of the present invention will be described below clearly and completely in conjunction with accompanying drawings of the examples of the present invention. Apparently, the examples described are some examples rather than all examples of the present invention. In general, assemblies described and shown in the examples of the present invention herein can be arranged and designed in various different configurations.

It should be noted that similar reference numerals and letters indicate similar items in the following accompanying drawings, once defined in one accompanying drawing, an item is unnecessary to be defined and explained in subsequent accompanying drawings.

In the description of the present invention, it should be noted that an orientation or positional relation indicated by a term such as "up", "down", "left", "right", "vertical", "horizontal", "inside" or "outside" are based on an orientation or positional relation shown in the accompanying drawings, or is an orientation or positional relation of common placement of the product during use of the present invention, is for facilitating description of the present invention and simplifying the description rather than indicating or implying that an apparatus or element referred to or implied must have a particular orientation or be constructed and operated in a particular orientation, and therefore cannot be understood as limitation to the present invention. In addition, a term such as "first", "second" or "third" is used for distinguishing description and cannot be understood as indicating or implying relative importance. In the description of the present invention, "plurality" means at least two unless otherwise specified.

In the description of the present invention, it should be noted that, unless otherwise explicitly specified and defined, terms "arrange" and "connect" should be understood in a broad sense. For example, a fixed connection, a detachable connection, or an integrated connection, a mechanical connection or an electrical connection are all possible. For a person of ordinary skill in the art, specific meanings of the above terms in the present invention can be understood according to specific circumstances.

In the present invention, unless otherwise specified and limited, a first feature "above" or "below" a second feature indicates that the first feature can be in direct contact with the second feature, or in indirect contact with the second feature through another feature therebetween. Further, the first feature "above", "over" and "on a top of" the second feature indicates that the first feature is over and obliquely above the second feature, or indicates that the first feature is higher than the second feature in horizontal height. The first feature "below", "under" and "on a bottom of" the second feature indicates that the first feature may be under the second feature and obliquely below the second feature, or indicates that the first feature is smaller than the second feature in horizontal height.

The examples of the present invention will be described in detail below, and instances of the examples are shown in the accompanying drawings, where identical or similar reference numerals indicate identical or similar elements or elements having identical or similar functions throughout. The examples described below with reference to the accompanying drawings are illustrative and are merely used to explain the present invention, but cannot be construed as limitation to the present invention.

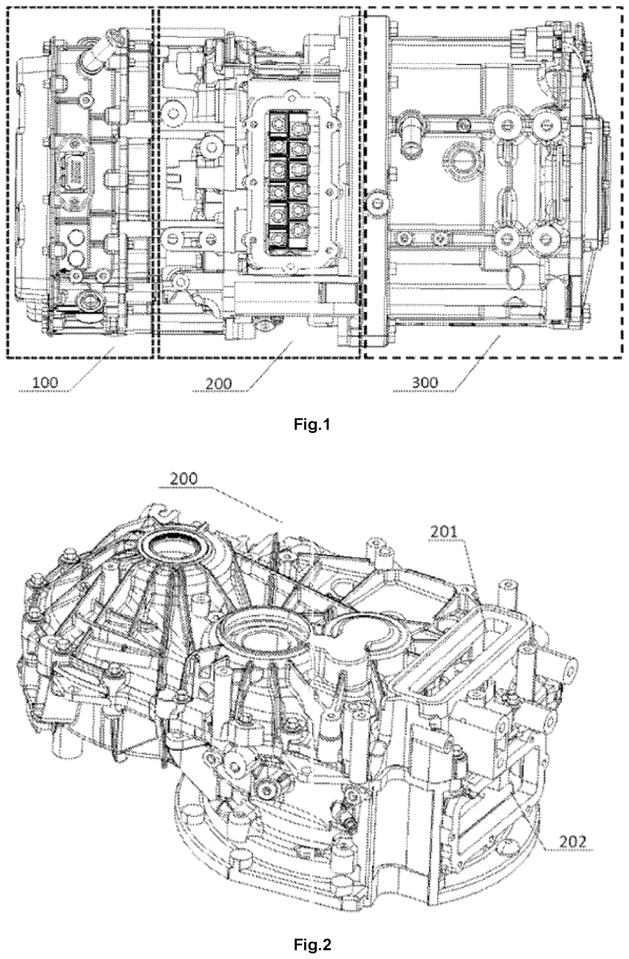

As shown in Figs. 1-3, this example discloses an electric drive system. The electric drive system comprises an inverter assembly 100, a motor assembly 300 and a reducer assembly 200. The inverter assembly 100 and the motor assembly 300 are both connected with the reducer assembly 200, and located at two sides of the reducer assembly 200 respectively.

There are two main types of inverter assemblies 100, an inverter assembly of one type comprises a first alternating-current busbar assembly 6, and an inverter assembly of the other type comprises a second alternating-current busbar assembly 9. There are also two types of motor assemblies 300, a motor assembly of one type comprises a common three-phase motor and a motor assembly of the other type comprises a six-phase motor. The inverter assembly 100 including the first alternating-current busbar assembly 6 and the motor assembly 300 including the three-phase motor are configured and applied correspondingly. The inverter assembly 100 including the second alternating-current busbar assembly 9 and the motor assembly 300 including the six-phase motor are configured and applied correspondingly.

An electric drive system composed of the inverter assembly 100 including the first alternating-current busbar assembly 6, the motor assembly 300 including the three-phase motor and the reducer assembly 200 is referred as a single three-phase solution, and an electric drive system composed of the inverter assembly 100 including the second alternating-current busbar assembly 9, the motor assembly 300 including the six-phase motor and the reducer assembly 200 is referred as a dual three-phase solution.

The reducer assembly 200 includes a reducer and an adapter seat 220 arranged on the reducer. Illustratively, the reducer is arranged with a conducting bar via hole 201 and a connection window 202, and the adapter seat 220 is arranged on the connection window 202. The adapter seat 220 is arranged with a U1 input interface 221, a U2 input interface 222, a V1 input interface 223, a V2 input interface 224, a W1 input interface 225, a W2 input interface 226, a U1 output interface, a U2 output interface, a V1 output interface, a V2 output interface, a W1 output interface and a W2 output interface.

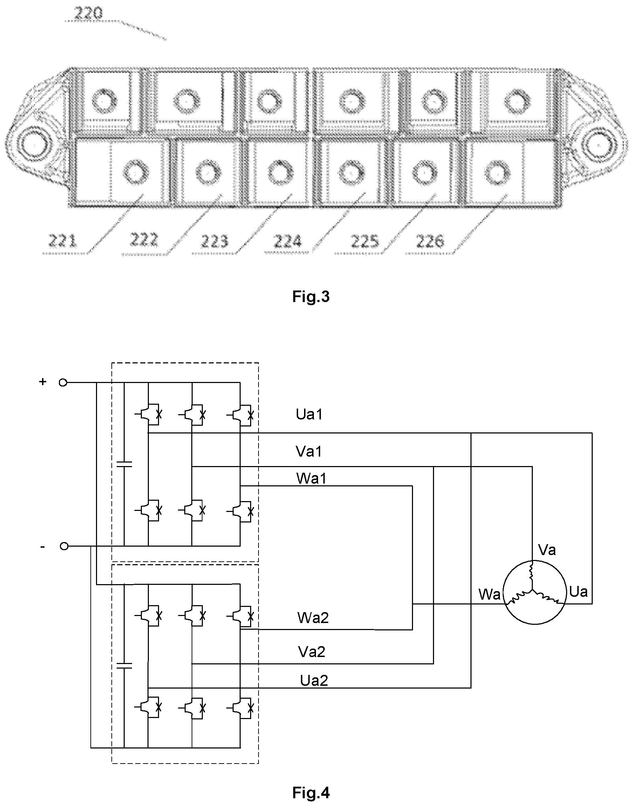

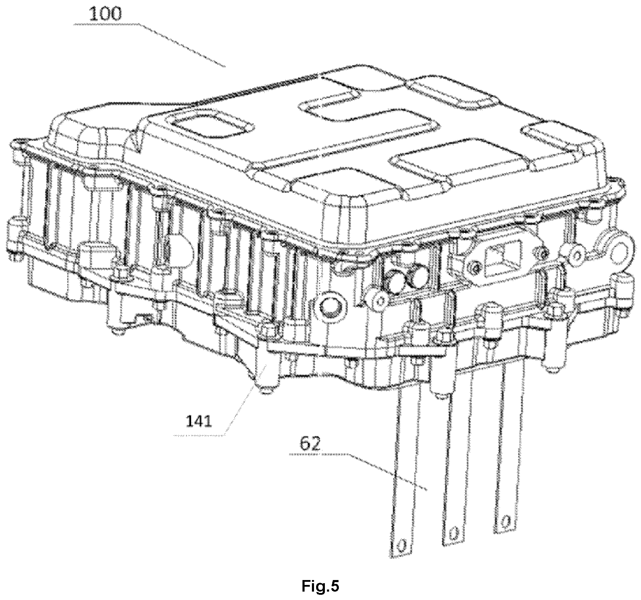

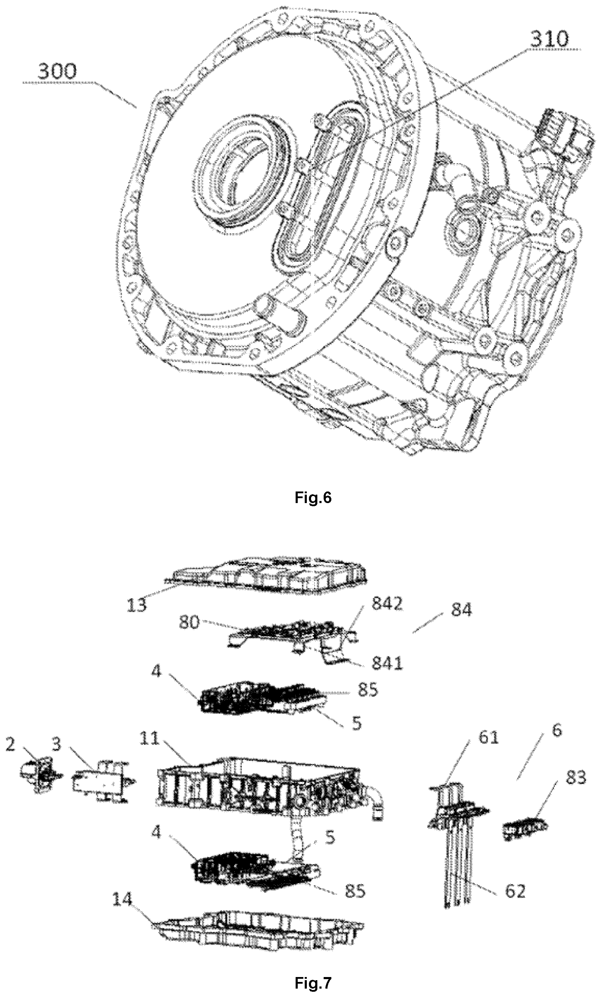

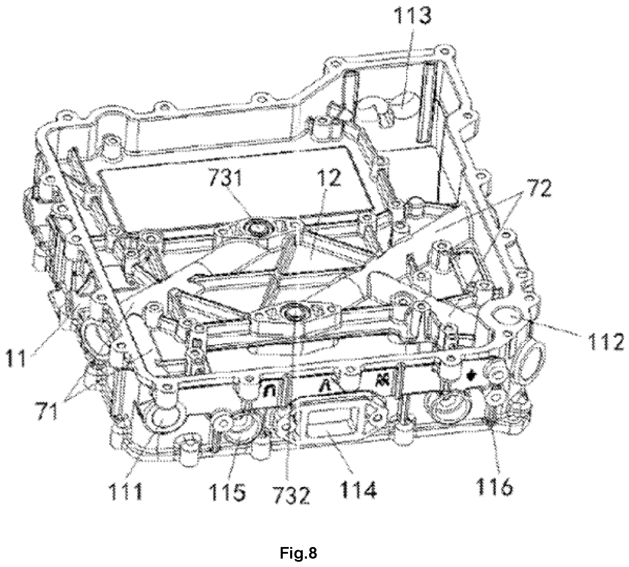

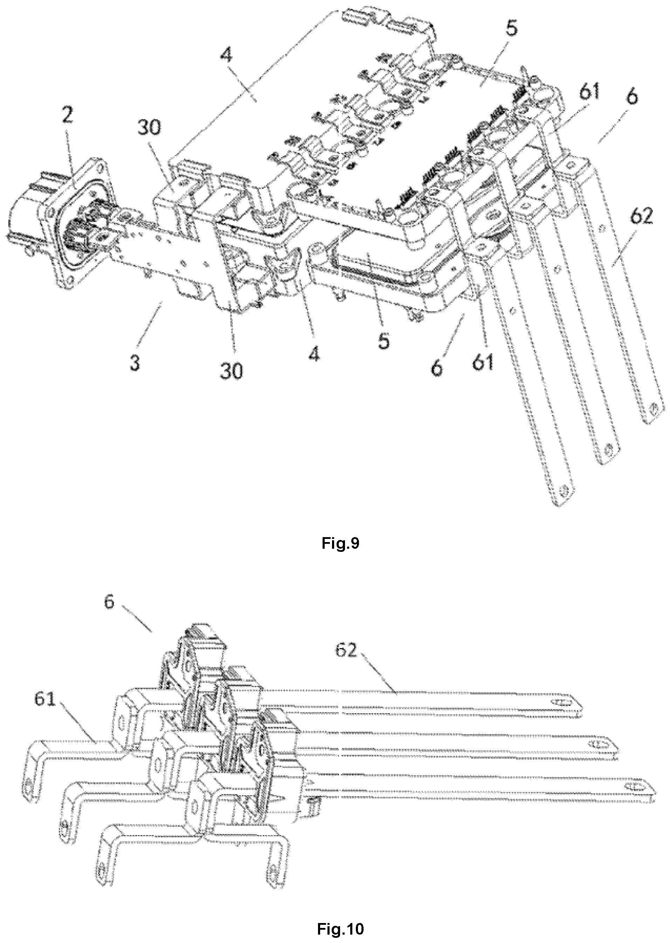

As shown in Figs. 4-10, the inverter assembly 100 comprises a case assembly, a control panel 80, two drive boards 85, a partition plate 12, a shield plate 84, a high-voltage direct-current connector 2, a direct-current busbar assembly 3, a direct-current bus capacitor assembly, a cooling assembly and a ventilator. The above structures of inverter assemblies 100 of the two solutions are same. The inverter assemblies of the two solutions each further include two power modules 5 arranged in the case assembly despite a different lying in an internal circuit principle and the alternating-current busbar assembly.

The single three-phase solution is as follows:
The case assembly comprises a main case 11, and an upper cap 13 and a lower cap 14 that are arranged at an upper opening and a lower opening of the main case 11 respectively. Two power modules 5 are arranged in parallel, the drive boards 85 are electrically connected with the control panel 80, and the two drive boards 85 is corresponded to the power modules 5. The drive boards 85 are electrically connected with the power module 5 corresponding thereto, and the control panel 80 may communicate with a power module 5 corresponding to the drive board through the drive board 85, that is, the control panel 80 may control the power module 5 through the drive board 85. The structural design that the two power modules 5 are connected in parallel guarantees a current distribution effect and improves a power output capacity and a current output capacity of the inverter assembly 100.

The partition plate 12 is made from an electromagnetic shielding material, and the partition plate 12 is arranged in the case assembly to divide the case assembly into two mounting cavities. Illustratively, the partition plate 12 is fixed to an inner wall of the main case 11. One drive board 85 and the corresponding power module 5 are located in one mounting cavity, and the other drive board 85 and the corresponding power module 5 are located in the other mounting cavity. The two power modules 5 are electromagnetically isolated from each other through the partition plate 12, thereby improving an anti-electromagnetic interference capacity of the power modules 5.

The shield plate 84 is arranged in one mounting cavity, the control panel 80 is arranged in the one mounting cavity, that is, the shield plate 84 and the control panel 80 are located in the same mounting cavity, and the control panel 80 and the power module 5 located in the one mounting cavity are located at two sides of the shield plate 84. The shield plate 84 is applied to electromagnetically isolate the power module 5 from the control panel 80 in the same mounting cavity, thereby improving an anti-interference capacity of the power module 5.

Illustratively, in this example, the shield plate 84 comprises a connected shield portion 841 parallel to the partition plate 12 and a connection portion 842 connected with an inner wall of the main case 11. The power module 5 in the mounting cavity is arranged between the shield portion 841 and the partition plate 12, and the control panel 80 is arranged at a side, facing away from the partition plate 12 of the shield portion 841. The shield plate 84 with the above structure improves an anti-electromagnetic interference capacity between the power module 5 and the control panel 80.

The main case 11 is arranged with a grounding point 116, the inner wall of the main case 11 is arranged with a support point, the connection portion 842 is fixed to the support point through a crimping nut, and the control panel 80 is connected with the shield plate 84 through a bolt, such that the shield plate 84 is applied to provide mounting support for the control panel 80 while electromagnetic shielding is implemented.

The high-voltage direct-current connector 2, the direct-current busbar assembly 3 and the direct-current bus capacitor assembly are electrically connected in sequence. The cabinet assembly is arranged with a mounting port, and the high-voltage direct-current connector 2 is arranged on the mounting port 113 of the high-voltage direct-current connector, and the high-voltage direct-current connector 2 is configured to be connected to a battery junction box to provide an input port for inputting an external direct-current high-voltage power. The direct-current busbar assembly 3 and the direct-current bus capacitor assembly are both arranged in the same mounting cavity. The two power modules 5 are electrically connected with the direct-current bus capacitor assembly.

The direct-current busbar assembly 3, the two power modules 5, the first alternating-current busbar assembly 6 and the direct-current bus capacitor assembly are all symmetrically arranged with respect to a plane perpendicular to a thickness direction of the partition plate 12.

The power module 5 is arranged with three power output ends. The first alternating-current busbar assembly 6 includes three first output terminals 62, two power modules 5 are connected in parallel through the first alternating-current busbar assembly 6, and the three first output terminals 62 are connected with the three power output ends respectively. Illustratively, the first alternating-current busbar assembly 6 further includes six first alternating-current busbars 61, that is, an alternating-current busbar U11, an alternating-current busbar U12, an alternating-current busbar V11, an alternating-current busbar V12, an alternating-current busbar W11 and an alternating-current busbar W12, and the three first output terminals 62 comprise an output terminal U1, an output terminal V1 and an output terminal W1.

The alternating-current busbar U11, the alternating-current busbar U12 and the output terminal U1 are integrally formed, the alternating-current busbar V11, the alternating-current busbar V12 and the output terminal V1 are integrally formed, and alternating-current busbar W11, the alternating-current busbar W12 and the output terminal W1 are integrally formed. By adopting the above arrangement, the first alternating-current busbar assembly 6 can have a more compact structure, a short current path, and less heating amount, and generate less electromagnetic interference.

The alternating-current busbar U11 and the alternating-current busbar U12 are both connected with the output terminal U1, the alternating-current busbar V11 and the alternating-current busbar V12 are both connected with the output terminal V1, and the alternating-current busbar W11 and the alternating-current busbar W12 are both connected with the output terminal W1. The alternating-current busbar U11, the alternating-current busbar V11 and the alternating-current busbar W11 are connected with three power output ends of one power module 5 respectively, and the alternating-current busbar U12, the alternating-current busbar V12 and the alternating-current busbar W12 are connected with three power output ends of the other power module 5 respectively. The alternating-current busbar U11 bar and alternating-current busbar U12 bar are symmetrically arranged with respect to the plane perpendicular to the thickness direction of the partition plate 12, the alternating-current busbar V11 bar and the alternating-current busbar V12 bar are symmetrically arranged with respect to the plane perpendicular to the thickness direction of the partition plate 12, and the alternating-current busbar W11 bar and the alternating-current busbar W12 are symmetrically arranged with respect to the plane perpendicular to the thickness direction of the partition plate 12.

The first output terminal 62 of the inverter assembly 100 penetrates the conducting bar via hole 201, to be inserted into the adapter seat 220, and an alternating-current terminal 310 of the motor assembly 300 is inserted into the adapter seat 220. Illustratively, the three first output terminals 62 may be connected with the U1 input interface 221, the V1 input interface 223 and the W1 input interface 225 respectively. That is, the output terminal U1, the output terminal V1 and the output terminal W1 may be connected with the U1 input interface 221, the V1 input interface 223 and the W1 input interface 225 respectively. In this case, correspondingly, the three first alternating-current terminals 310 of the three-phase motor are connected with the U1 output interface, the V1 output interface and the W1 output interface respectively. Alternatively, the three first output terminals 62 may be connected with the U2 input interface 222, the V2 input interface 224 and the W2 input interface 226 respectively, that is, the output terminal U1, the output terminal V1 and the output terminal W1 may be connected with the U2 input interface 222, the V2 input interface 224 and the W2 input interface 226 respectively. In this case, the three first alternating-current terminals 310 of the three-phase motor are connected with the U2 output interface, the V2 output interface and the W2 output interface respectively.

Illustratively, the first alternating-current busbar assembly 6 further includes a current measurement assembly. In this example, the current measurement assembly includes three current sensors 83. Alternatively, in this example, the alternating-current busbar U11, the alternating-current busbar V11 and the alternating-current busbar W11 are each arranged with a current sensor 83, or the alternating-current busbar U12, the alternating-current busbar V12 and the alternating-current busbar W12 are each arranged with a current sensor 83, and the current sensor 83 is configured to measure a current of a corresponding alternating-current busbar. In other examples, the current measurement assembly includes two current sensors 83, the two current sensors 83 are arranged on the alternating-current busbar U11 and the alternating-current busbar U12, or the alternating-current busbar V11 and the alternating-current busbar V12, or the alternating-current busbar W11 and the alternating-current busbar W12, and a current of an alternating-current bus without a current sensor 83 in the alternating-current busbar assembly is computed theough a current of an alternating-current busbar with a current sensor 83. A current computation method is related art, and will not be repeated herein. In other examples, an integrated current sensor unit that may simultaneously measure currents of the alternating-current busbar U11, the alternating-current busbar U12, the alternating-current busbar V11, the alternating-current busbar V12, the alternating-current busbar W11 and the alternating-current busbar W12 may also be adopted.

The control panel 80 is arranged with a current signal interface, and the current measurement assembly is electrically connected with the current signal interface through a harness. The main case 11 is arranged with a low-voltage connector mounting port 114, and the low-voltage connector mounting port 114 is configured to mount a low-voltage connector. The control panel 80 is arranged with a low-voltage connector signal interface, and the low-voltage connector is electrically connected with the low-voltage connector signal interface through a harness. The control panel 80 is arranged with a high-voltage interlocking signal interface. Two drive boards 85 are electrically connected with the high-voltage interlocking signal interface through harnesses.

The direct-current busbar assembly 3, the direct-current bus capacitor assembly, the first alternating-current busbar assembly 6 and the two power modules 5 are all symmetrically arranged with respect to the plane perpendicular to the thickness direction of the partition plate 12. Through adopting the above symmetrical arrangement, static current distribution and dynamic current distribution effects of the parallel dual power modules 5 are guaranteed through above structure.

The direct-current busbar assembly 3 comprises a conductive bar and direct-current busbar wiring terminals arranged parallel and corresponding to the power modules 5. One end of the conductive bar is electrically connected with the high-voltage direct-current connector 2, and the other end of the high-voltage direct-current connector is electrically connected with two direct-current busbar wiring terminals. Each direct-current busbar wiring terminal is electrically connected with a corresponding power module 5 through a direct-current bus capacitor 4.

Alternatively, in this example, the direct-current bus capacitor assembly comprises two direct-current bus capacitors 4, and the direct-current bus capacitors 4 are in correspondence to the power modules 5 and the direct-current bus capacitors 4 are electrically connected to the power modules 5. The direct-current bus capacitor 4 and the corresponding power module 5 are arranged in the same mounting cavity, and the two direct-current bus capacitors 4 are symmetrically arranged with respect to the plane perpendicular to the thickness direction of the partition plate 12. Each direct-current bus capacitor 4 is arranged with a pair of capacitor input ends and N pairs of capacitor output ends, the pair of capacitor input ends of each direct-current bus capacitor 4 are electrically connected with a positive output end and a negative output end of the direct-current busbar assembly 3 respectively, and the power module 5 is arranged with power input ends in correspondence to the capacitor output ends of a corresponding direct-current bus capacitor 4 and in electrical connection to the capacitor output ends of a corresponding direct-current bus capacitor 4.

In other examples, the direct-current bus capacitor assembly may further be an integrated direct-current bus capacitor 4. In this case, the direct-current bus capacitor assembly has a pair of capacitor input ends, N pairs of first capacitor output ends and N pairs of second capacitor output ends, and the pair of capacitor input ends are electrically connected with the positive output end and the negative output end of the direct-current busbar assembly 3 respectively. One power module 5 is arranged with first power input ends in one-to-one correspondence to the first capacitor output ends and in electrical connection to the first capacitor output ends. The other power module 5 is arranged with second power input ends in one-to-one correspondence to the second capacitor output ends and in electrical connection the second capacitor output ends. It should be noted that in response to the integrated direct-current bus capacitor 4 being taken, copper bars and cores in the direct-current bus capacitor 4 are required to be designed symmetrically to guarantee that paths from the input end of the direct-current bus capacitor 4 to the input ends of the two power modules 5 are consistent as much as possible.

The conductive bar includes a positive conductive bar and a negative conductive bar, one end of the positive conductive bar is electrically connected with a positive pole of the high-voltage direct-current connector 2, and the other end of the positive conductive bar is electrically connected with a positive pole of a corresponding direct-current bus capacitor 4 through a positive pole of the direct-current busbar wiring terminal. One end of the negative conductive bar is electrically connected with a negative pole of the high-voltage direct-current connector 2, and the other end of the negative conductive bar is electrically connected with a negative pole of a corresponding direct-current bus capacitor 4 through a negative pole of the direct-current busbar wiring terminal.

The cooling assembly is arranged between the two power modules 5 and configured to cool the two power modules 5, and may cool the two power modules 5 simultaneously. The cooling assembly is symmetrically arranged with respect to the plane perpendicular to the thickness direction of the partition plate 12.

Illustratively, the cooling assembly includes two parallel cooling water channels corresponding to the power modules 5 one-to-one. The two cooling water channels are symmetrically arranged with respect to the plane perpendicular to the thickness direction of the partition plate 12, in which cooling liquids circulate. In this example, the cooling water channel is arranged on the corresponding power module 5.

The cooling assembly further comprises a water inlet channel 71 and a water outlet channel 72, the water inlet channel 71 and the water outlet channel 72 are symmetrically arranged with respect to the partition plate 12. A downstream end of the water inlet channel 71 is arranged with two first cooling water ports 731, and the two first cooling water ports 731 are in communication with inlets of the two cooling water channels respectively. An upstream end of the water outlet channel 72 is arranged with two second cooling water ports 732, and the two second cooling water ports 732 are in communication with outlets of the two cooling water channels respectively. With the cooling assembly based on this example, the two power modules 55 can be cooled synchronously, such that similar cooling effects of the two power modules 55 can be achieved.

Illustratively, the main case 11 is arranged with a cooling water inlet 111 and a cooling water outlet 112. The cooling water inlet 111 is in communication with the two cooling water channels through the water inlet channel 71, and the two cooling water channels are in communication with the cooling water outlet 112 through the water outlet channel 72. The cooling water inlet 111 is connected with a water inlet pipe and the cooling water outlet 112 is connected with a water outlet pipe.

In other examples, the two cooling water channels may be arranged in the partition plate 12 and distributed in the thickness direction of the partition plate 1212. Alternatively, the cooling assembly is arranged to comprise one heat dissipation channel formed in the partition plate 12.

The ventilator is configured to adjust an air pressure in the case assembly to balance air pressures inside and outside the cabinet assembly. Illustratively, the main case 11 is arranged with a ventilator mounting port 115, and the ventilator mounting port 115 is configured to mount the ventilator.

Alternatively, the upper cap 13 is an aluminum alloy die casting, the upper cap 13 and the control panel 80 are arranged at the same side of the shield plate 84, and the upper cap 13 is configured to seal a cavity body arranged with the control panel 80. The lower cap 14 is an aluminum alloy die casting, and is arranged to seal a cavity body without the control panel 80. Alternatively, the upper cap 13 and the lower cap 14 are arranged with reinforcing ribs to satisfy requirements of noise, vibration and harshness (NVH). The lower cap 14 is arranged with a plurality of circumferentially distributed mounting posts 141, and the mounting posts 141 are arranged with mounting holes, the mounting holes are configured to connect the inverter assembly 100 to a side of the reducer assembly 200.

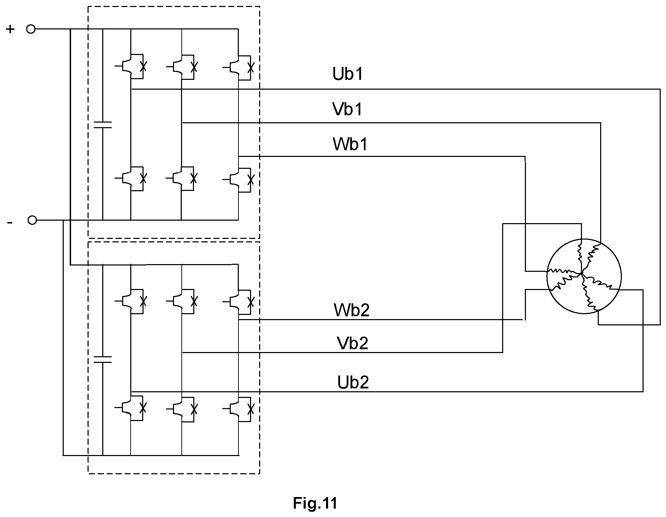

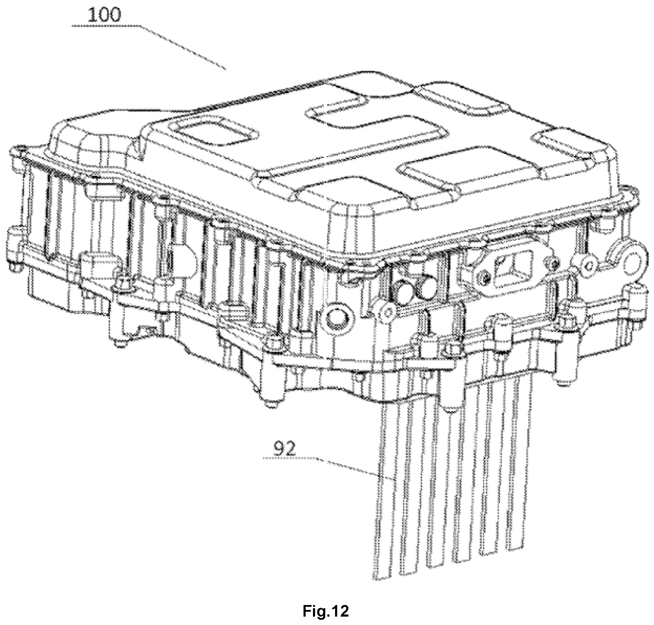

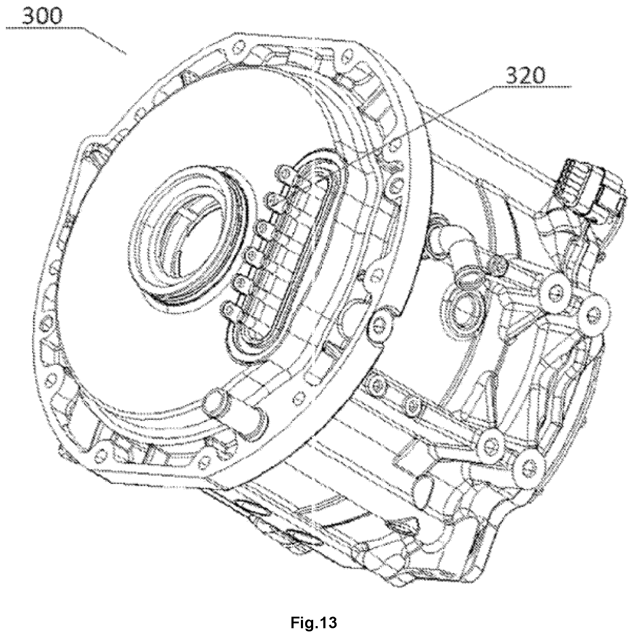

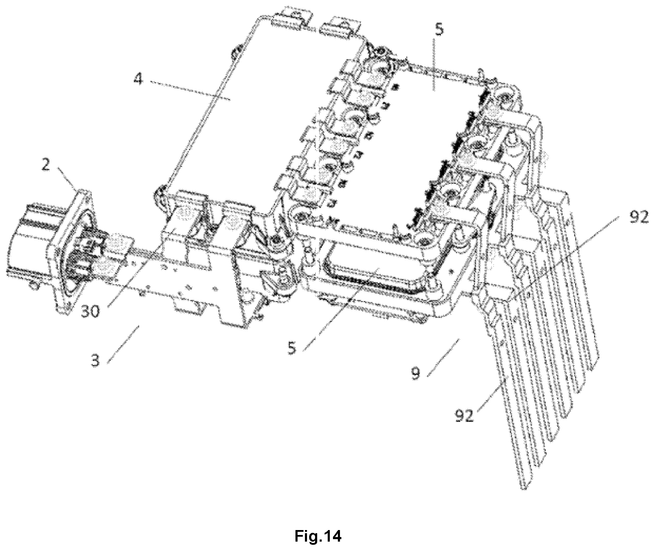

The dual three-phase solution is as follows:
As shown in Figs. 11-15, the case assembly comprises a main case 11 and an upper cap 13 and a lower cap 14 arranged at an upper opening and a lower opening of the main case 11 respectively. The drive boards 85 are electrically connected with the control panel 80, the two drive boards 85 are corresponded to the power modules 5 one-to-one, the drive boards 85 are electrically connected with the corresponding power modules 5 corresponding, and the control panel 80 may communicate with a power module 5 corresponding the drive board through the drive board 85, that is, the control panel 80 may control the power module 5 through the drive board 85. The two power modules 5 are designed in an opposite structure.

The partition plate 12 is made from an electromagnetic shielding material, and the partition plate 12 is arranged in the case assembly to divide the case assembly into two mounting cavities. Illustratively, the partition plate 12 is fixed to an inner wall of the main case 11. One drive board 85 and the corresponding power module 5 are located in one mounting cavity, and the other drive board 85 and the corresponding power module 5 are located in the other mounting cavity. The two power modules 5 are electromagnetically isolated from each other through the partition plate 12, thereby improving an anti-electromagnetic interference capacity of the power modules 5.

The shield plate 84 is arranged in one mounting cavity, the control panel 80 is arranged in the one mounting cavity, that is, the shield plate 84 and the control panel 80 are located in the same mounting cavity, and the control panel 80 and the power module 5 located in the one mounting cavity are located at two sides of the shield plate 84. The shield plate 84 is applied to electromagnetically isolate the power module 5 from the control panel 80 in the same mounting cavity, thereby improving an anti-interference capacity of the power module 5.

Illustratively, in this example, the shield plate 84 comprises a shield portion 841 parallel to the partition plate 12 and a connection portion 842 connected with an inner wall of the main case 11. The shield portion 841 is connected with the connection portion 842. The power module 5 in the mounting cavity is arranged between the shield portion 841 and the partition plate 12, and the control panel 80 is arranged at a side, facing away from the partition plate 12 of the shield portion 841. The shield plate 84 with the above structure improves an anti-electromagnetic interference capacity between the power module 5 and the control panel 80.

The main case 11 is arranged with a grounding point 116, the inner wall of the main case 11 is arranged with a support point, the connection portion 842 is fixed to the support point through a crimping nut, and the control panel 80 is connected with the shield plate 84 through a bolt, such that the shield plate 84 is applied to provide mounting support for the control panel 80 while electromagnetic shielding is implemented.

The high-voltage direct-current connector 2, the direct-current busbar assembly 3 and the direct-current bus capacitor assembly are electrically connected in sequence. The cabinet assembly is arranged with a mounting port, and the high-voltage direct-current connector 2 is arranged on the mounting port 113 of the high-voltage direct-current connector, and the high-voltage direct-current connector 2 is configured to be connected with a battery junction box to provide an input port for inputting an external direct-current high-voltage power. The direct-current busbar assembly 3 and the direct-current bus capacitor assembly are both arranged in the same mounting cavity. The two power modules 5 are electrically connected with the direct-current bus capacitor assembly.

The direct-current busbar assembly 3, the two power modules 5 and the direct-current bus capacitor assembly are all symmetrically arranged with respect to a plane perpendicular to a thickness direction of the partition plate 12.

Each power module 5 is arranged with three power output ends, two second alternating-current busbar assemblies 9 are located in the two mounting cavities respectively, and the two second alternating-current busbar assemblies 9 are corresponded to the two power modules 5 one-to-one. Each second alternating-current busbar assembly 9 includes three second alternating-current busbars and three second output terminals 92, one power module 5 is corresponded to one second alternating-current busbar assembly 9, and the three second alternating-current busbars are connected with the three power output ends respectively. The second output terminal 92 of the inverter assembly 100 penetrates the conducting bar via hole 201, to be inserted into the adapter seat 220, and an second alternating-current terminal 320 of a motor assembly 300 is inserted into the adapter seat 220. Illustratively, six second output terminals 92 may be connected with a U1 input interface 221, a U2 input interface 222, a V1 input interface 223, a V2 input interface 224, a W1 input interface 225 and a W2 input interface 226 respectively. Correspondingly, six second alternating-current terminals 320 of a double-winding motor (that is, the six-phase motor) are connected with a U1 output interface, a U2 output interface, a V1 output interface, a V2 output interface, a W1 output interface and a W2 output interface respectively.

Illustratively, three second alternating-current busbars of one first second alternating-current busbar assembly are an alternating-current busbar U21, an alternating-current busbar V21 and an alternating-current busbar W21, and three second output terminals 92 are an output terminal U21, an output terminal V21 and an output terminal W21. The alternating-current busbar U21, the alternating-current busbar V21 and the alternating-current busbar W21 are in correspondence to and in electrical connection to the output terminal U21, the output terminal V21 and the output terminal W21. The alternating-current busbar U21, the alternating-current busbar V21 and the alternating-current busbar W21 are connected with three power output ends of a power module 5 corresponding to the second alternating-current busbar assembly 9 respectively, and the output terminal U21, the output terminal V21 and the output terminal W21 are connected with the U1 input interface 221, the V1 input interface 223 and the W1 input interface 225 respectively. Three second alternating-current busbars of the other first second alternating-current busbar assembly are an alternating-current busbar U22, an alternating-current busbar V22 and an alternating-current busbar W22, and three second output terminals 92 are an output terminal U22, an output terminal V22 and an output terminal W22. The alternating-current busbar U22, the alternating-current busbar V22 and the alternating-current busbar W22 are in correspondence to the output terminal U22, the output terminal V22 and the output terminal W22 and in electrical connection to the output terminal U22, the output terminal V22 and the output terminal W22. The alternating-current busbar U22, the alternating-current busbar V22 and the alternating-current busbar W22 are connected with three power output ends of a power module 5 corresponding to the second alternating-current busbar assembly 9 respectively, and the output terminal U22, the output terminal V22 and the output terminal W22 are connected with the U2 input interface 222, the V2 input interface 224 and the W2 input interface 226 respectively.

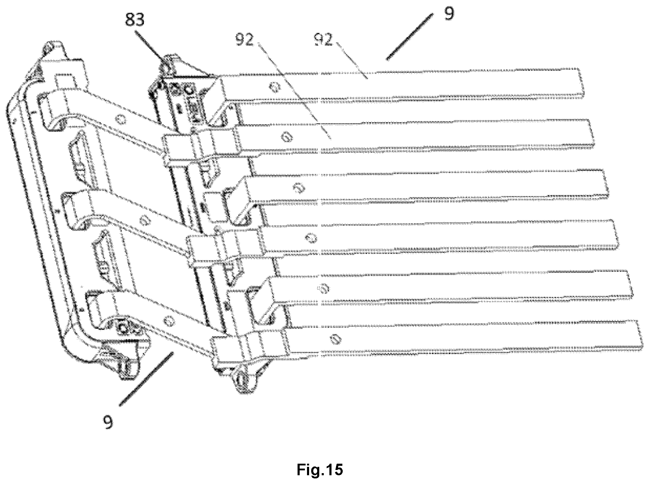

The second output terminals 92 of the two second alternating-current busbar assemblies 9 are staggered at intervals. That is, the output terminal U21, the output terminal U22, the output terminal V21, the output terminal V22, the output terminal W21 and the output terminal W22 are arranged in a linear mode. In order to avoid interference between the second output terminals 92 of the two second alternating-current busbar assemblies 9, the second output terminals 92 of the two second alternating-current busbar assemblies 9 with the same front end structure (portions that fit with the adapter seat) and different rear end structures, as shown in Fig. 15.

Alternatively, the second alternating-current busbar assembly 9 further includes a current measurement assembly. In this example, the current measurement assembly is a three-in-one current sensor 83, and each second alternating-current busbar assembly 9 is arranged with one current sensor 83 configured to measure a three-phase current of the second alternating-current busbar assembly 9.

The control panel 80 is arranged with a current signal interface, and the current measurement assembly is electrically connected with the current signal interface through a harness. The main case 11 is arranged with a low-voltage connector mounting port 114 configured to mount a low-voltage connector. The control panel 80 is arranged with a low-voltage connector signal interface, and the low-voltage connector is electrically connected with the low-voltage connector signal interface through a harness. The control panel 80 is arranged with a high-voltage interlocking signal interface. Two drive boards 85 are electrically connected with the high-voltage interlocking signal interface through harnesses.

The direct-current busbar assembly 3, the direct-current bus capacitor assembly and the two power modules 5 are all symmetrically arranged with respect to the plane perpendicular to the thickness direction of the partition plate 12. By adopting the above symmetrical arrangement, static current distribution and dynamic current distribution effects of the parallel dual power modules 5 are guaranteed structurally.

The direct-current busbar assembly 3 includes a conductive bar and direct-current busbar wiring terminals arranged parallel and corresponding to the power modules 5. One end of the conductive bar is electrically connected with the high-voltage direct-current connector 2, and the other end of the high-voltage direct-current connector is electrically connected with two direct-current busbar wiring terminals. Each direct-current busbar wiring terminal is electrically connected with a corresponding power module 5 through a direct-current bus capacitor 4.

Alternatively, in this example, the direct-current bus capacitor assembly includes two direct-current bus capacitors 4, and the direct-current bus capacitors 4 are in correspondence to the power modules 5 and in electrical connection to the power modules 5. The direct-current bus capacitor 4 and the corresponding power module 5 are arranged in the same mounting cavity, and the two direct-current bus capacitors 4 are symmetrically arranged with respect to the plane perpendicular to the thickness direction of the partition plate 12. Each direct-current bus capacitor 4 is arranged with a pair of capacitor input ends and N pairs of capacitor output ends, the pair of capacitor input ends of each direct-current bus capacitor 4 are electrically connected with a positive output end and a negative output end of the direct-current busbar assembly 3 respectively, and the power module 5 is arranged with power input ends in correspondence to the capacitor output ends of a corresponding direct-current bus capacitor 4 and in electrical connection to the capacitor output ends of a corresponding direct-current bus capacitor 4.

In other examples, the direct-current bus capacitor assembly may further be an integrated direct-current bus capacitor 4. In this case, the direct-current bus capacitor assembly has a pair of capacitor input ends, N pairs of first capacitor output ends and N pairs of second capacitor output ends, the pair of capacitor input ends are electrically connected with the positive output end and the negative output end of the direct-current busbar assembly 3 respectively. One power module 5 is arranged with first power input ends in one-to-one correspondence to the first capacitor output ends and in electrical connection to the first capacitor output ends. The other power module 5 is arranged with second power input ends in one-to-one correspondence to the second capacitor output ends and in electrical connection to the second capacitor output ends. It should be noted that in response to the integrated direct-current bus capacitor 4 being taken, copper bars and cores in the direct-current bus capacitor 4 are required to be designed symmetrically to guarantee that paths from the input end of the direct-current bus capacitor 4 to the input ends of the two power modules 5 are consistent as much as possible.

The conductive bar comprises a positive conductive bar and a negative conductive bar, one end of the positive conductive bar is electrically connected with a positive pole of the high-voltage direct-current connector 2, and the other end of the positive conductive bar is electrically connected with a positive pole of a corresponding direct-current bus capacitor 4 through a positive pole of the direct-current busbar wiring terminal. One end of the negative conductive bar is electrically connected with a negative pole of the high-voltage direct-current connector 2, and the other end of the negative conductive bar is electrically connected with a negative pole of a corresponding direct-current bus capacitor 4 through a negative pole of the direct-current busbar wiring terminal.

The cooling assembly is arranged between the two power modules 5 and configured to cool the two power modules 5, and may cool the two power modules 5 simultaneously. The cooling assembly is symmetrically arranged with respect to the plane perpendicular to the thickness direction of the partition plate 12.

Illustratively, the cooling assembly comprises two cooling water channels in parallel to each other and in correspondence to the power modules 5. The two cooling water channels are symmetrically arranged with respect to the plane perpendicular to the thickness direction of the partition plate 12, in which cooling liquids circulate. In this example, the cooling water channel is arranged on the corresponding power module 5.

The cooling assembly further includes a water inlet channel 71 and a water outlet channel 72, the water inlet channel 71 and the water outlet channel 72 are symmetrically arranged with respect to the partition plate 12. A downstream end of the water inlet channel 71 is arranged with two first cooling water ports 731, and the two first cooling water ports 731 are in communication with inlets of the two cooling water channels respectively. An upstream end of the water outlet channel 72 is arranged with two second cooling water ports 732, and the two second cooling water ports 732 are in communication with outlets of the two cooling water channels 73 respectively. With the cooling assembly based on this example, the two power modules 5 can be cooled synchronously, such that similar cooling effects of the two power modules 5 can be achieved.

Illustratively, the main case 11 is arranged with a cooling water inlet 111 and a cooling water outlet 112. The cooling water inlet 111 is in communication with the two cooling water channels through the water inlet channel 71, and the two cooling water channels are in communication with the cooling water outlet 112 through the water outlet channel 72. The cooling water inlet 111 is connected with a water inlet pipe and the cooling water outlet 112 is connected with a water outlet pipe.

In other examples, the two cooling water channels may be arranged in the partition plate 12 and distributed in the thickness direction of the partition plate 12. Alternatively, the cooling assembly is arranged to comprise one heat dissipation channel formed in the partition plate 12.

The ventilator is configured to adjust an air pressure in the case assembly to balance air pressures inside and outside the cabinet assembly. Illustratively, the main case 11 is arranged with a ventilator mounting port 115 configured to mount the ventilator.

Alternatively, the upper cap 13 is an aluminum alloy die casting, the upper cap 13 and the control panel 80 are arranged at the same side of the control panel 80, and the upper cap 13 is configured to seal a cavity body arranged with the control panel 80. The lower cap 14 is an aluminum alloy die casting, and is arranged to seal a cavity body without the control panel 80. Alternatively, the upper cap 13 and the lower cap 14 are arranged with reinforcing ribs to satisfy requirements of NVH. The lower cap 14 is arranged with multiple circumferentially distributed mounting posts 141, and the mounting posts 141 are arranged with mounting holes configured to connect the inverter assembly 100 to a side of the reducer assembly 200.

This example further discloses a vehicle. The vehicle comprises a vehicle body and the electric drive system above mentioned, and the electric drive system is arranged on the vehicle body.

An inverter assembly and a motor assembly are arranged at two sides of a reducer respectively. An inverter assembly arranged with a first alternating-current busbar assembly and a three-phase motor are correspondingly arranged, and an adapter seat may be connected with a first output terminal and the three-phase motor. An inverter assembly arranged with a second alternating-current busbar assembly and a six-phase motor are correspondingly arranged, and an adapter seat may be connected with a second output terminal and the six-phase motor.

In the case the motor assembly is a common three-phase motor, an inverter assembly arranged with a first alternating-current busbar assembly is selected. In the case the motor assembly is a six-phase motor, an inverter assembly arranged with a second alternating-current busbar assembly is selected. Two types of inverter assemblies have basically the same structure despite a difference lying in the alternating-current busbar assembly and an internal connection circuit.

The solution can guarantee that external shapes, interfaces and fixing forms of two types of electric drive systems that are based on completely different working principles are completely the same, and the two types of electric drive systems have strong interchangeability, such that minimal types of parts and lowest cost of this layout solution are guaranteed. Modular design of the inverter assembly is implemented, the inverter assemblies corresponding to two types of motors can be synchronously developed, and a research and development cost can be reduced.

Parallel dual-power modules can provide high drive power and high currents for an ordinary three-phase motor. Combined action of the dual-power modules and a six-phase motor can achieve an effect of high power.

## Claims

1. An electric drive system, comprising:
an inverter assembly (100), the inverter assembly (100) comprises a case assembly and two power modules (5) arranged in the case assembly, and each power module (5) is arranged with three power output ends;
the inverter assembly (100) further comprises a first alternating-current busbar assembly (6), the first alternating-current busbar assembly (6) comprises three first output terminals (62), the two power modules (5) are connected in parallel through the first alternating-current busbar assembly (6), and the three first output terminals (62) are connected with the three power output ends respectively; or the inverter assembly (100) further comprises two second alternating-current busbar assemblies (9), each second alternating-current busbar assembly (9) comprises three second alternating-current busbars and three second output terminals (92), one power module (5) corresponds to one second alternating-current busbar assembly (9), the three second alternating-current busbars are connected with the three power output ends respectively;
a motor assembly (300), wherein the motor assembly (300) comprises a three-phase motor, or the motor assembly (300) comprises a six-phase motor;
a reducer assembly (200), wherein the reducer assembly (200) comprises a reducer and an adapter seat (220) arranged on the reducer, and the inverter assembly (100) and the motor assembly (300) are arranged at two sides of the reducer respectively; the inverter assembly (100) arranged with the first alternating-current busbar assembly (6) is configured corresponding to the three-phase motor, and the adapter seat (220) is connected with the three first output terminals (62) and the three-phase motor; and the inverter assembly (100) arranged with the two second alternating-current busbar assemblies (9) is configured corresponding to the six-phase motor, and the adapter seat (220) is connected with six second output terminals (92) and the six-phase motor;
wherein the reducer is arranged with a conducting bar via hole (201) and a connection window (202), the adapter seat (220) is arranged on the connection window (202), the three first output terminals (62) or the six second output terminals (92) of the inverter assembly (100) are configured to penetrate the conducting bar via hole (201), to be inserted into the adapter seat (220), and an alternating-current terminal of the motor assembly (300) is inserted into the adapter seat (220).

2. The electric drive system as claimed in claim 1, wherein the adapter seat (220) is arranged with a U1 input interface (221), a U2 input interface (222), a V1 input interface (223), a V2 input interface (224), a W1 input interface (225), a W2 input interface (226), a U1 output interface, a U2 output interface, a V1 output interface, a V2 output interface, a W1 output interface and a W2 output interface;
the three first output terminals (62) are connected with the U1 input interface (221), the V1 input interface (223) and the W1 input interface (225) respectively, and correspondingly, three first alternating-current terminals (310) of the three-phase motor are connected with the U1 output interface, the V1 output interface and the W1 output interface respectively, the three first output terminals (62) are connected with the U2 input interface (222), the V2 input interface (224) and the W2 input interface (226) respectively, the three first alternating-current terminals (310) of the three-phase motor are connected with the U2 output interface, the V2 output interface and the W2 output interface respectively;
the six second output terminals (92) are connected with the U1 input interface (221), the U2 input interface (222), the V1 input interface (223), the V2 input interface (224), the W1 input interface (225) and the W2 input interface (226) respectively, and correspondingly, six second alternating-current terminals (320) of the six-phase motor are connected with the U1 output interface, the U2 output interface, the V1 output interface, the V2 output interface, the W1 output interface and the W2 output interface respectively.

3. The electric drive system as claimed in claim 2, wherein the first alternating-current busbar assembly (6) further comprises six first alternating-current busbars (61), wherein the six first alternating-current busbars (61)comprises an alternating-current busbar U11, an alternating-current busbar U12, an alternating-current busbar V11, an alternating-current busbar V12, an alternating-current busbar W11 and an alternating-current busbar W12, and the three first output terminals (62) are an output terminal U1, an output terminal V1 and an output terminal W1;
the alternating-current busbar U11 and the alternating-current busbar U12 are both connected with the output terminal U1, the alternating-current busbar V11 and the alternating-current busbar V12 are both connected with the output terminal V1, and the alternating-current busbar W11 and the alternating-current busbar W12 are both connected with the output terminal W1; and
the alternating-current busbar U11, the alternating-current busbar V11 and the alternating-current busbar W11 are connected with three power output ends of one power module (5) respectively, and the alternating-current busbar U12, the alternating-current busbar V12 and the alternating-current busbar W12 are connected with the three power output ends of the other power module (5) respectively.

4. The electric drive system as claimed in claim 1, wherein the inverter assembly (100) further comprises a control panel (80) and two drive boards (85), the two drive boards (85) are electrically connected with the control panel (80), the two drive boards (85) are corresponded to the two power modules (5) one-to-one, and each of the two drive boards (85) is electrically connected with the corresponding power module (5).

5. The electric drive system as claimed in claim 4, wherein the inverter assembly (100) further comprises a partition plate (12) arranged from an electromagnetic shielding material, the partition plate (12) is arranged in the case assembly to divide the case assembly into two mounting cavities, one drive board of the two drive boards(85) and the power module (5) corresponding to this one drive board are located in one mounting cavity of the two mounting cavities, and the other drive board (85) and the corresponding power module (5) corresponding to this one drive board are located in the other mounting cavity.

6. The electric drive system as claimed in claim 5, wherein the inverter assembly (100) further comprises a shield plate (84), the shield plate (84) is arranged in one mounting cavity of the two mounting cavities, the control panel (80) is arranged in this one mounting cavity, and the control panel (80) and the power module (5) located in this one mounting cavity are located at two sides of the shield plate (84).

7. The electric drive system as claimed in claim 1, wherein the inverter assembly (100) further comprises a high-voltage direct-current connector (2), a direct-current busbar assembly (3) and a direct-current bus capacitor assembly that are electrically connected in sequence;
the case assembly is arranged with a mounting port, the high-voltage direct-current connector (2) is arranged on the mounting port, and the high-voltage direct-current connector (2) is configured to be connected with a battery junction box;
the two power modules (5) are electrically connected with the direct-current bus capacitor assembly.

8. The electric drive system as claimed in claim 1, wherein the inverter assembly (100) further comprises:
a cooling assembly, arranged between the two power modules (5) and configured to cool the two power modules (5);
a ventilator, configured to adjust an air pressure in the case assembly.

9. A vehicle, comprising the electric drive system as claimed in any one of claims 1-8.

10. The electric drive system as claimed in claim 8, wherein the cooling assembly further comprises a water inlet channel (71) and a water outlet channel (72), the water inlet channel (71) and the water outlet channel (72) are symmetrically arranged with respect to the partition plate (12).

11. The electric drive system as claimed in claim 10, wherein a downstream end of the water inlet channel (71) is arranged with two first cooling water ports (731), and the two first cooling water ports (731) are in communication with inlets of the two cooling water channels respectively.

12. The electric drive system as claimed in claim 10, wherein an upstream end of the water outlet channel (72) is arranged with two second cooling water ports (732), and the two second cooling water ports (732) are in communication with outlets of the two cooling water channels (73) respectively.

13. The electric drive system as claimed in claim 8, wherein the cooling assembly comprises two cooling water channels in parallel to each other and in correspondence to the power modules (5).

14. The electric drive system as claimed in claim 13, wherein the two cooling water channels are symmetrically arranged with respect to the plane perpendicular to the thickness direction of the partition plate (12), in which cooling liquids circulate.

## Patentansprüche

1. Elektrisches Antriebssystem, umfassend:
eine Wechselrichterbaugruppe (100), wobei die Wechselrichterbaugruppe (100) eine Gehäusebaugruppe und zwei Leistungsmodule (5) umfasst, die in der Gehäusebaugruppe angeordnet sind, und ein jedes Leistungsmodul (5) mit drei Leistungsausgangsenden angeordnet ist;
die Wechselrichterbaugruppe (100) ferner eine erste Wechselstromsammelschienenbaugruppe (6) umfasst, die erste Wechselstromsammelschienenbaugruppe (6) drei erste Ausgangsklemmen (62) umfasst, die zwei Leistungsmodule (5) über die erste Wechselstromsammelschienenbaugruppe (6) parallel geschaltet sind und die drei ersten Ausgangsklemmen (62) jeweils mit den drei Leistungsausgangsenden verbunden sind; oder die Wechselrichterbaugruppe (100) ferner zwei zweite Wechselstromsammelschienenbaugruppen (9) umfasst, eine jede zweite Wechselstromsammelschienenbaugruppe (9) drei zweite Wechselstromsammelschienen und drei zweite Ausgangsklemmen (92) umfasst, ein Leistungsmodul (5) einer zweiten Wechselstromsammelschienenbaugruppe (9) entspricht, die drei zweiten Wechselstromsammelschienen jeweils mit den drei Leistungsausgangsenden verbunden sind;
eine Motorbaugruppe (300), wobei die Motorbaugruppe (300) einen Drehstrommotor umfasst oder die Motorbaugruppe (300) einen Sechsphasenmotor umfasst;
eine Untersetzungsbaugruppe (200), wobei die Untersetzungsbaugruppe (200) ein Untersetzungsgetriebe und einen Adaptersitz (220) umfasst, der an dem Untersetzungsgetriebe angeordnet ist, und die Wechselrichterbaugruppe (100) und die Motorbaugruppe (300) jeweils an zwei Seiten des Untersetzungsgetriebes angeordnet sind; die Wechselrichterbaugruppe (100), die mit der ersten Wechselstromsammelschienenbaugruppe (6) angeordnet ist, entsprechend dem Drehstrommotor ausgelegt ist und der Adaptersitz (220) mit den drei ersten Ausgangsklemmen (62) und dem Drehstrommotor verbunden ist; und die Wechselrichterbaugruppe (100), die mit den zwei zweiten Wechselstromsammelschienenbaugruppen (9) angeordnet ist, entsprechend dem Sechsphasenmotor ausgelegt ist und der Adaptersitz (220) mit sechs zweiten Ausgangsklemmen (92) und dem Sechsphasenmotor verbunden ist;
wobei das Untersetzungsgetriebe mit einem Leiterstabdurchgangsloch (201) und einem Verbindungsfenster (202) angeordnet ist, der Adaptersitz (220) an dem Verbindungsfenster (202) angeordnet ist, die drei ersten Ausgangsklemmen (62) oder die sechs zweiten Ausgangsklemmen (92) der Wechselrichterbaugruppe (100) ausgelegt sind, um den Leiterstabdurchgangsloch (201) zu durchdringen, um in den Adaptersitz (220) eingeführt zu werden, und eine Wechselstromklemme der Motorbaugruppe (300) in den Adaptersitz (220) eingeführt wird.

2. Elektrisches Antriebssystem nach Anspruch 1, wobei der Adaptersitz (220) mit einer U1-Eingangsschnittstelle (221), einer U2-Eingangsschnittstelle (222), einer V1-Eingangsschnittstelle (223), einer V2-Eingangsschnittstelle (224), einer W1-Eingangsschnittstelle (225), einer W2-Eingangsschnittstelle (226), einer U1-Ausgangsschnittstelle, einer U2-Ausgangsschnittstelle, einer V1-Ausgangsschnittstelle, einer V2-Ausgangsschnittstelle, einer W1-Ausgangsschnittstelle und einer W2-Ausgangsschnittstelle angeordnet ist;
die drei ersten Ausgangsklemmen (62) jeweils mit der U1-Eingangsschnittstelle (221), der V1-Eingangsschnittstelle (223) und der W1-Eingangsschnittstelle (225) verbunden sind und dementsprechend drei erste Wechselstromklemmen (310) des Drehstrommotors jeweils mit der U1-Ausgangsschnittstelle, der V1-Ausgangsschnittstelle und der W1-Ausgangsschnittstelle verbunden sind, die drei ersten Ausgangsklemmen (62) jeweils mit der U2-Eingangsschnittstelle (222), der V2-Eingangsschnittstelle (224) und der W2-Eingangsschnittstelle (226) verbunden sind, die drei ersten Wechselstromklemmen (310) des Drehstrommotors jeweils mit der U2-Ausgangsschnittstelle, der V2-Ausgangsschnittstelle und der W2-Ausgangsschnittstelle verbunden sind;
die sechs zweiten Ausgangsklemmen (92) jeweils mit der U1-Eingangsschnittstelle (221), der U2-Eingangsschnittstelle (222), der V1-Eingangsschnittstelle (223), der V2-Eingangsschnittstelle (224), der W1-Eingangsschnittstelle (225) und der W2-Eingangsschnittstelle (226) verbunden sind, und dementsprechend sechs zweite Wechselstromklemmen (320) des Sechsphasenmotors jeweils mit der U1-Ausgangsschnittstelle, der U2-Ausgangsschnittstelle, der V1-Ausgangsschnittstelle, der V2-Ausgangsschnittstelle, der W1-Ausgangsschnittstelle und der W2-Ausgangsschnittstelle verbunden sind.

3. Elektrisches Antriebssystem nach Anspruch 2, wobei die erste Wechselstromsammelschienenbaugruppe (6) ferner sechs erste Wechselstromsammelschienen (61) umfasst, wobei die sechs ersten Wechselstromsammelschienen (61) eine Wechselstromsammelschiene U11, eine Wechselstromsammelschiene U12, eine Wechselstromsammelschiene V11, eine Wechselstromsammelschiene V12, eine Wechselstromsammelschiene W11 und eine Wechselstromsammelschiene W12 umfassen und die drei ersten Ausgangsklemmen (62) eine Ausgangsklemme U1, eine Ausgangsklemme V1 und eine Ausgangsklemme W1 sind;
die Wechselstromsammelschiene U11 und die Wechselstromsammelschiene U12 sind beide mit der Ausgangsklemme U1 verbunden, die Wechselstromsammelschiene V11 und die Wechselstromsammelschiene V12 sind beide mit der Ausgangsklemme V1 verbunden, und die Wechselstromsammelschiene W11 und die Wechselstromsammelschiene W12 sind beide mit der Ausgangsklemme W1 verbunden; und
die Wechselstromsammelschiene U11, die Wechselstromsammelschiene V11 und die Wechselstromsammelschiene W11 jeweils mit drei Leistungsausgangsenden eines Leistungsmoduls (5) verbunden sind und die Wechselstromsammelschiene U12, die Wechselstromsammelschiene V12 und die Wechselstromsammelschiene W12 jeweils mit den drei Leistungsausgangsenden des anderen Leistungsmoduls (5) verbunden sind.

4. Elektrisches Antriebssystem nach Anspruch 1, wobei die Wechselrichterbaugruppe (100) ferner ein Bedienfeld (80) und zwei Antriebsplatinen (85) umfasst, die zwei Antriebsplatinen (85) elektrisch mit dem Bedienfeld (80) verbunden sind, die zwei Antriebsplatinen (85) den zwei Leistungsmodulen (5) eins zu eins entsprechen und eine jede der zwei Antriebsplatinen (85) elektrisch mit dem entsprechenden Leistungsmodul (5) verbunden ist.

5. Elektrisches Antriebssystem nach Anspruch 4, wobei die Wechselrichterbaugruppe (100) ferner eine Trennplatte (12) umfasst, die aus einem elektromagnetisch abschirmenden Material besteht, wobei die Trennplatte (12) in der Gehäusebaugruppe angeordnet ist, um die Gehäusebaugruppe in zwei Montagehohlräume zu unterteilen, wobei sich eine Antriebsplatine der zwei Antriebsplatinen (85) und das Leistungsmodul (5), das dieser einen Antriebsplatine entspricht, in einem Montagehohlraum der zwei Montagehohlräume befinden, und sich die andere Antriebsplatine (85) und das entsprechende Leistungsmodul (5), das dieser einen Antriebsplatine entspricht, in dem anderen Montagehohlraum befinden.

6. Elektrisches Antriebssystem nach Anspruch 5, wobei die Wechselrichterbaugruppe (100) ferner ein Abschirmblech (84) umfasst, das Abschirmblech (84) in einem Montagehohlraum der zwei Montagehohlräume angeordnet ist, das Bedienfeld (80) in diesem einen Montagehohlraum angeordnet ist und sich das Bedienfeld (80) und das in diesem einen Montagehohlraum befindliche Leistungsmodul (5) an zwei Seiten des Abschirmblechs (84) befinden.

7. Elektrisches Antriebssystem nach Anspruch 1, wobei die Wechselrichterbaugruppe (100) ferner einen Hochspannungsgleichstromverbinder (2), eine Gleichstromsammelschienenbaugruppe (3) und eine Gleichstromsammelschienenkondensatorbaugruppe umfasst, die elektrisch nacheinander verbunden sind;
die Gehäusebaugruppe mit einem Montageanschluss angeordnet ist, der Hochspannungsgleichstromverbinder (2) an dem Montageanschluss angeordnet ist und der Hochspannungsgleichstromverbinder (2) dazu ausgelegt ist, mit einem Batterieanschlusskasten verbunden zu werden;
die zwei Leistungsmodule (5) elektrisch mit der Gleichstromsammelschienenkondensatorbaugruppe verbunden sind.

8. Elektrisches Antriebssystem nach Anspruch 1, wobei die Wechselrichterbaugruppe (100) ferner Folgendes umfasst:
eine Kühlbaugruppe, die zwischen den zwei Leistungsmodulen (5) angeordnet und dazu ausgelegt ist, die zwei Leistungsmodule (5) zu kühlen;
einen Ventilator, der dazu ausgelegt ist, einen Luftdruck in der Gehäusebaugruppe einzustellen.

9. Fahrzeug, umfassend das elektrische Antriebssystem nach einem der Ansprüche 1-8.

10. Elektrisches Antriebssystem nach Anspruch 8, wobei die Kühlbaugruppe ferner einen Wassereinlasskanal (71) und einen Wasserauslasskanal (72) umfasst, wobei der Wassereinlasskanal (71) und der Wasserauslasskanal (72) in Bezug auf die Trennplatte (12) symmetrisch angeordnet sind.

11. Elektrisches Antriebssystem nach Anspruch 10, wobei ein stromabwärtiges Ende des Wassereinlasskanals (71) mit zwei ersten Kühlwasseranschlüssen (731) angeordnet ist und die zwei ersten Kühlwasseranschlüsse (731) jeweils mit Einlässen der zwei Kühlwasserkanäle in Kommunikation stehen.

12. Elektrisches Antriebssystem nach Anspruch 10, wobei ein stromaufwärtiges Ende des Wasserauslasskanals (72) mit zwei zweiten Kühlwasseranschlüssen (732) angeordnet ist und die zwei zweiten Kühlwasseranschlüsse (732) jeweils mit Auslässen der zwei Kühlwasserkanäle (73) in Kommunikation stehen.

13. Elektrisches Antriebssystem nach Anspruch 8, wobei die Kühlbaugruppe zwei Kühlwasserkanäle in parallel zueinander und in Übereinstimmung mit den Leistungsmodulen (5) umfasst.

14. Elektrisches Antriebssystem nach Anspruch 13, wobei die zwei Kühlwasserkanäle bezüglich der Ebene senkrecht zur Dickenrichtung der Trennplatte (12), in der Kühlflüssigkeiten zirkulieren, symmetrisch angeordnet sind.

## Revendications

1. Système de propulsion électrique, comprenant :
un ensemble onduleur (100), l'ensemble onduleur (100) comprend un ensemble boîtier et deux modules de puissance (5) placés dans l'ensemble boîtier, et chaque module de puissance (5) est agencé avec trois extrémités de sortie de puissance ;
l'ensemble onduleur (100) comprend en outre un premier ensemble barre omnibus (6) à courant alternatif, le premier ensemble barre omnibus (6) à courant alternatif comprend trois premières bornes de sortie (62), les deux modules de puissance (5) sont connectés en parallèle via le premier ensemble barre omnibus (6) à courant alternatif, et les trois premières bornes de sortie (62) sont connectées, respectivement, aux trois extrémités de sortie de puissance ; ou l'ensemble onduleur (100) comprend en outre deux seconds ensembles de barre omnibus (9) à courant alternatif, chaque second ensemble barre omnibus (9) à courant alternatif comprend trois secondes barres omnibus à courant alternatif et trois secondes bornes de sortie (92), un module de puissance (5) correspond à un second ensemble barre omnibus (9) à courant alternatif, les trois secondes barres omnibus à courant alternatif sont connectées, respectivement, aux trois extrémités de sortie de puissance ;
un ensemble moteur (300), dans lequel l'ensemble moteur (300) comprend un moteur triphasé, ou l'ensemble moteur (300) comprend un moteur à six phases ;
un ensemble réducteur (200), dans lequel l'ensemble réducteur (200) comprend un réducteur et un siège d'adaptateur (220) placé sur le réducteur, et l'ensemble onduleur (100) et l'ensemble moteur (300) sont disposés, respectivement, sur deux côtés du réducteur ; l'ensemble onduleur (100) agencé avec le premier ensemble barre omnibus (6) à courant alternatif est configuré de manière à correspondre au moteur triphasé, et le siège d'adaptateur (220) est connecté aux trois premières bornes de sortie (62) et au moteur triphasé ; et l'ensemble onduleur (100) agencé avec les deux seconds ensembles barre omnibus (9) à courant alternatif est configuré de manière à correspondre au moteur à six phases, et le siège d'adaptateur (220) est connecté aux six secondes bornes de sortie (92) et au moteur à six phases ;
dans lequel le réducteur est agencé avec un trou d'interconnexion (201) de barre conductrice et une fenêtre de connexion (202), le siège d'adaptateur (220) est placé sur la fenêtre de connexion (202), les trois premières bornes de sortie (62) ou les six secondes bornes de sortie (92) de l'ensemble onduleur (100) sont configurées pour pénétrer dans le trou d'interconnexion (201) de barre conductrice, pour être insérées dans le siège d'adaptateur (220), et une borne à courant alternatif de l'ensemble moteur (300) est insérée dans le siège d'adaptateur (220).

2. Système de propulsion électrique selon la revendication 1, dans lequel le siège d'adaptateur (220) est agencé avec une interface d'entrée U1 (221), une interface d'entrée U2 (222), une interface d'entrée V1 (223), une interface d'entrée V2 (224), une interface d'entrée W1 (225), une interface d'entrée W2 (226), une interface de sortie U1, une interface de sortie U2, une interface de sortie V1, une interface de sortie V2, une interface de sortie W1 et une interface de sortie W2 ;
les trois premières bornes de sortie (62) sont connectées, respectivement, à l'interface d'entrée U1 (221), à l'interface d'entrée V1 (223) et à l'interface d'entrée W1 (225), et de manière correspondante, trois premières bornes (310) à courant alternatif du moteur triphasé sont connectées, respectivement, à l'interface de sortie U1, à l'interface de sortie V1 et à l'interface de sortie W1, les trois premières bornes de sortie (62) sont connectées, respectivement, à l'interface d'entrée U2 (222), à l'interface d'entrée V2 (224) et à l'interface d'entrée W2 (226), les trois premières bornes (310) à courant alternatif du moteur triphasé sont connectées, respectivement, à l'interface de sortie U2, à l'interface de sortie V2 et à l'interface de sortie W2 ;
les six secondes bornes de sortie (92) sont connectées, respectivement, à l'interface d'entrée U1 (221), à l'interface d'entrée U2 (222), à l'interface d'entrée V1 (223), l'interface d'entrée V2 (224), l'interface d'entrée W1 (225) et l'interface d'entrée W2 (226), et de manière correspondante, six secondes bornes (320) à courant alternatif du moteur à six phases sont connectées, respectivement, à l'interface de sortie U1, à l'interface de sortie U2, à l'interface de sortie V1, à l'interface de sortie V2, à l'interface de sortie W1 et à l'interface de sortie W2.

3. Système de propulsion électrique selon la revendication 2, dans lequel le premier ensemble barre omnibus (6) à courant alternatif comprend en outre six premières barres omnibus (61) à courant alternatif, dans lequel les six premières barres omnibus (61) à courant alternatif comprennent une barre omnibus à courant alternatif U11, une barre omnibus à courant alternatif U12, une barre omnibus à courant alternatif V11, une barre omnibus à courant alternatif V12, une barre omnibus à courant alternatif W11 et une barre omnibus à courant alternatif W12, et les trois premières bornes de sortie (62) sont une borne de sortie U1, une borne de sortie V1 et une borne de sortie W1 ;
la barre omnibus à courant alternatif U11 et la barre omnibus à courant alternatif U12 sont toutes deux connectées à la borne de sortie U1, la barre omnibus à courant alternatif V11 et la barre omnibus à courant alternatif V12 sont toutes deux connectées à la borne de sortie V1, et la barre omnibus à courant alternatif W11 et la barre omnibus à courant alternatif W12 sont toutes deux connectées à la borne de sortie W1 ; et
la barre omnibus à courant alternatif U11, la barre omnibus à courant alternatif V11 et la barre omnibus à courant alternatif W11 sont connectées, respectivement, aux trois extrémités de sortie de puissance d'un module de puissance (5), et la barre omnibus à courant alternatif U12, la barre omnibus à courant alternatif V12 et la barre omnibus à courant alternatif W12 sont connectées, respectivement, aux trois extrémités de sortie de puissance de l'autre module de puissance (5).

4. Système de propulsion électrique selon la revendication 1, dans lequel l'ensemble onduleur (100) comprend en outre un panneau de contrôle (80) et deux cartes de commande (85), les deux cartes de commande (85) sont connectées électriquement au panneau de contrôle (80), les deux cartes de commande (85) correspondent aux deux modules de puissance (5) de manière biunivoque, et chacune des deux cartes de commande (85) est connectée électriquement au module de puissance (5) correspondant.

5. Système de propulsion électrique selon la revendication 4, dans lequel l'ensemble onduleur (100) comprend en outre une plaque de séparation (12) réalisée à partir d'un matériau de blindage électromagnétique, la plaque de séparation (12) est disposée dans l'ensemble boîtier pour diviser l'ensemble boîtier en deux cavités de montage, l'une des deux cartes de commande (85) et le module de puissance (5) correspondant à cette carte de commande sont situés dans l'une des deux cavités de montage, et l'autre carte de commande (85) et le module de puissance (5) correspondant à cette carte de commande sont situés dans l'autre cavité de montage.

6. Système de propulsion électrique selon la revendication 5, dans lequel l'ensemble onduleur (100) comprend en outre une plaque de protection (84), la plaque de protection (84) est disposée dans l'une des deux cavités de montage, le panneau de contrôle (80) est disposé dans cette cavité de montage, et le panneau de contrôle (80) et le module de puissance (5) situés dans cette cavité de montage sont situés des deux côtés de la plaque de protection (84).

7. Système de propulsion électrique selon la revendication 1, dans lequel l'ensemble onduleur (100) comprend en outre un connecteur en courant continu haute tension (2), un ensemble barre omnibus (3) à courant continu et un ensemble condensateur de bus à courant continu qui sont connectés électriquement en séquence ; l'ensemble boîtier est agencé avec un port de montage, le connecteur en courant continu haute tension (2) est disposé sur le port de montage, et le connecteur en courant continu haute tension (2) est configuré pour être connecté à un boîtier de raccordement de batterie ; les deux modules de puissance (5) sont connectés électriquement à l'ensemble condensateur de bus à courant continu.

8. Système de propulsion électrique selon la revendication 1, dans lequel l'ensemble onduleur (100) comprend en outre :
un ensemble de refroidissement, disposé entre les deux modules de puissance (5) et configuré pour refroidir les deux modules de puissance (5) ;
un ventilateur, configuré pour régler la pression d'air dans l'ensemble boîtier.

9. Véhicule, comprenant le système de propulsion électrique selon l'une quelconque des revendications 1-8.

10. Système de propulsion électrique selon la revendication 8, dans lequel l'ensemble de refroidissement comprend en outre un canal d'entrée d'eau (71) et un canal de sortie d'eau (72), le canal d'entrée d'eau (71) et le canal de sortie d'eau (72) étant disposés symétriquement par rapport à la plaque de séparation (12).

11. Système de propulsion électrique selon la revendication 10, dans lequel une extrémité aval du canal d'entrée d'eau (71) est agencée avec deux premiers orifices (731) d'eau de refroidissement, et les deux premiers orifices (731) d'eau de refroidissement sont en communication, respectivement, avec les entrées des deux canaux d'eau de refroidissement.

12. Système de propulsion électrique selon la revendication 10, dans lequel une extrémité amont du canal de sortie d'eau (72) est agencée avec deux seconds orifices (732) d'eau de refroidissement, et les deux seconds orifices (732) d'eau de refroidissement sont en communication, respectivement, avec les sorties des deux canaux (73) d'eau de refroidissement.

13. Système de propulsion électrique selon la revendication 8, dans lequel l'ensemble de refroidissement comprend deux canaux d'eau de refroidissement parallèles l'un à l'autre et correspondant aux modules de puissance (5).

14. Système de propulsion électrique selon la revendication 13, dans lequel les deux canaux d'eau de refroidissement sont disposés symétriquement par rapport au plan perpendiculaire à la direction d'épaisseur de la plaque de séparation (12), dans lesquels circulent les liquides de refroidissement.
